(19) Europäisches Patentamt

European Patent Office

Office européen des brevets

(11) **EP 2 525 096 A1**

(12) **EUROPEAN PATENT APPLICATION**
published in accordance with Art. 153(4) EPC

(43) Date of publication:
**21.11.2012 Bulletin 2012/47**

(21) Application number: **11736799.5**

(22) Date of filing: **27.01.2011**

(51) Int Cl.:
*F04B 27/08* (2006.01)     *F16D 3/22* (2006.01)

(86) International application number:
**PCT/JP2011/000457**

(87) International publication number:
**WO 2011/093084 (04.08.2011 Gazette 2011/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.01.2010 JP 2010016708**

(71) Applicant: **Sanden Corporation
Isesaki-shi, Gunma 372-8502 (JP)**

(72) Inventor: **UCHIKADO, Iwao
Isesaki-shi
Gunma 372-8502 (JP)**

(74) Representative: **Prüfer & Partner GbR
European Patent Attorneys
Sohnckestrasse 12
81479 München (DE)**

(54) **COMPRESSOR**

(57)     In order to reduce the number of locations subjected to precision machining in a constant velocity joint mechanism in a previously proposed structure, reduce the cost of the constant velocity joint mechanism, and reduce the cost of a compressor, a compressor is provided with a constant velocity joint mechanism having balls held between guide grooves facing one another and formed on an inner ring and an outer ring. The guide grooves are formed in such a manner that one shoulder part (A) of one of the guide grooves and the shoulder part (B) of the other guide groove which is positioned on the opposite side to the shoulder part (A) are wrapped around the ball so as to exceed a virtual line that links the center of the ball and the common center of rotation of the inner ring and the outer ring. The wraparound of these shoulder parts (A) and (B) is set at an amount determined such that even if the inner ring and the outer ring are rotated relative to one another in a direction moving away from one another, the ball will not drop from between the two guide grooves.

FIG. 5

EP 2 525 096 A1

**Description**

Technical Field of the Invention

The present invention relates to a compressor, and specifically, to improvement of a variable displacement compressor previously proposed by the applicant of the present application which incorporates therein a new wobble plate rotation preventing mechanism.

Background Art of the Invention

With respect to a compressor having a constant velocity joint mechanism provided as a rotation preventing mechanism for a wobble plate, a wobble plate type variable displacement compressor is previously proposed by the applicant of the present invention which uses a constant velocity joint mechanism small-sized and good in durability and silent performance (Patent document 1). In this proposal, as the rotation preventing mechanism of the wobble plate, a constant velocity joint mechanism is provided, which comprises (a) an inner ring provided in a housing movably in an axial direction although rotation is prevented, supporting a rotational main shaft via a bearing at an inner diameter portion to rotate relatively and to move relatively in an axial direction and having a plurality of guide grooves for guiding a plurality of balls provided for power transmission, (b) a sleeve functioning as a wobble central member of the wobble movement of the wobble plate, provided on the rotational main shaft to rotate relatively thereto and to move in an axial direction and engaged with the inner ring movably in an axial direction together with the inner ring, (c) an outer ring having a plurality of guide grooves for guiding the balls at positions opposing respective guide grooves of the inner ring, supported on the sleeve wabblingly, supporting the wobble plate fixedly on an outer circumference and supporting the swash plate rotatably via a bearing, and (d) a plurality of balls held by the guide grooves formed in the inner ring and the outer ring at a condition of opposing each other and performing power transmission by being compressed between the guide grooves.

By this proposal, a wobble plate type variable displacement compressor made small-sized, good in durability and silent performance, easy-to-machine and inexpensive, has become possible, but, even in this proposed mechanism, a matter to be further improved is still left. Namely, in the above-described previously proposed mechanism, in the constant velocity joint mechanism, totally six balls of three balls transmitting loaded torque and three balls for maintaining the relative positional relationship between the inner ring side and the outer ring side of the constant velocity joint mechanism at a predetermined positional relationship which do not receive loaded torque are provided, and guide grooves provided in correspondence to these balls are formed at totally six places for the respective inner ring side and outer ring side. Although these guide grooves are formed by processing of cutting, because a precise accuracy for processing is required and the places to be processed are many to be totally six places, there remains a problem that the cost for the processing and the cost for parts accompanied therewith are expensive. Further, since there are many combination mechanism portions of balls and guide grooves retaining them from both sides, there remains a problem that the number of processes for assembly is large and the cost for assembly accompanied therewith is expensive.

Prior art documents

Patent documents

Patent document 1: JP-A-2008-138637

Summary of the Invention

Problems to be solved by the Invention

As described above, in the previously proposed structure described in Patent document 1, there remains a problem, in particular, that the cost for processing the structural parts is expensive accompanying with many precise processing places, and therefore, a cost reduction is required.

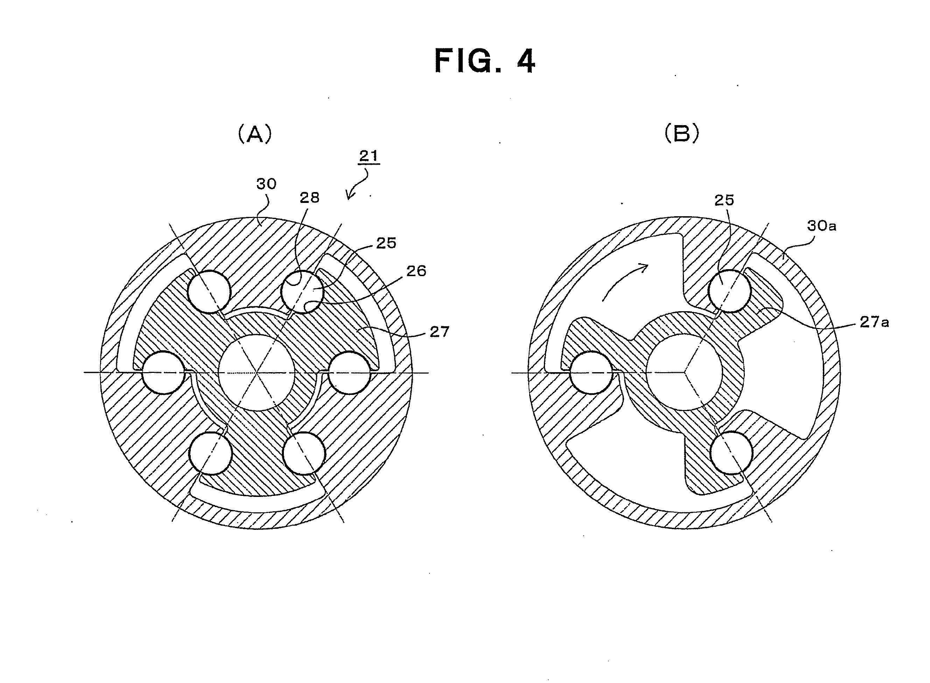

Accordingly, paying attention to the problem left in the above-described previously proposed structure, an object of the present invention is to reduce the cost for a constant velocity joint mechanism, ultimately, the cost for a compressor, by basically abolishing places to be processed except portions required for ensuring functions minimum for structuring parts with respect to the constant velocity joint mechanism. More concretely, although the present invention targets to reduce the cost by abolishing the balls at the side opposite the loaded side of the constant velocity joint mechanism in the previously proposed structure, thereby abolishing the processing of guide grooves corresponding to the abolished balls, as described later using Fig. 4, because only by merely abolishing this there may be a problem that the structure for retaining balls by guide grooves at both sides does not stand when a torque is not loaded, an object of the present invention is to provide a particularly improved structure capable of ensuring predetermined functions while solving this problem.

Means for solving the Problems

To achieve the above-described objects, a compressor according to the present invention is formed as a wobble plate type variable displacement compressor having a wobble plate which is connected to pistons inserted reciprocally into cylinder bores, in which a rotational movement of a swash plate, rotated together with a main shaft and supported changeably in angle relative to the main shaft, is converted into a wobble movement of the wobble plate, and which transmits the wobble movement to the pistons to reciprocate the pistons, and having a constant velocity joint mechanism as a rotation preventing mechanism of the wobble plate and a power transmission mechanism to the wobble plate, the constant velocity joint mechanism comprising (a) an inner ring provided movably in an axial direction while being prevented with rotation, supporting the main shaft at a radially inner portion rotatably mutually and movably mutually in an axial direction, and having guide grooves for guiding balls provided for power transmission, (b) an outer ring having guide grooves for guiding the balls at positions facing the guide grooves of the inner ring, supporting the wobble plate on an outer circumference of the outer ring and supporting the swash plate rotatably via a bearing, and (c) balls held by the guide grooves formed in the inner ring and the outer ring so as to face one another and performing power transmission by being compressed between the guide grooves, and is characterized in that the guide grooves formed in the inner ring and the outer ring so as to face one another are formed in such a manner that, with respect to a shape in a cross section including a virtual line that links a center of the ball held between the both guide grooves and a common center of rotation of the inner ring and the outer ring, one shoulder part (A) of one of the guide grooves is wrapped around relatively to an outer circumference of the ball so as to exceed the virtual line, and a shoulder part (B) of the other guide groove which is positioned on the opposite side to the shoulder part (A) of the one guide groove via the ball interposed is wrapped around relatively to the outer circumference of the ball so as to exceed the virtual line, respectively, and an amount of wraparound exceeding the virtual line of both shoulder parts (A) and (B) is set at an amount determined such that even if the inner ring and the outer ring are rotated relative to one another in a direction moving away from one another, the ball will not drop from between the both guide grooves.

Although the details of the aforementioned constant velocity joint mechanism in the structure described in Patent document 1 previously proposed by the applicant of the present invention will be described later, the main part of the structure having a relation with the present invention can be shown, for example, as shown in Fig. 4(A). Namely, guide grooves 26, 28 facing one another are formed in inner ring 27 and outer ring 30 of constant velocity joint mechanism 21, respectively, balls 25 are retained between both guide grooves 26, 28, and totally six sets of these guide grooves 26, 28 and balls 25 are provided on both sides of the arm portions of inner ring 27 or outer ring 30. Relatively to this structure, in order to reduce the cost by decreasing the places to be processed that is an object of the present invention, as shown in Fig. 4 (B) for example, if a structure of inner ring 27a and outer ring 30a is employed wherein non-drive side three sets (three places) are simply abolished (removed), in case where inner ring 27a and outer ring 30a are rotated relative to one another in a direction moving away from one another, balls 25 cannot be retained between both guide grooves, and balls 25 will drop.

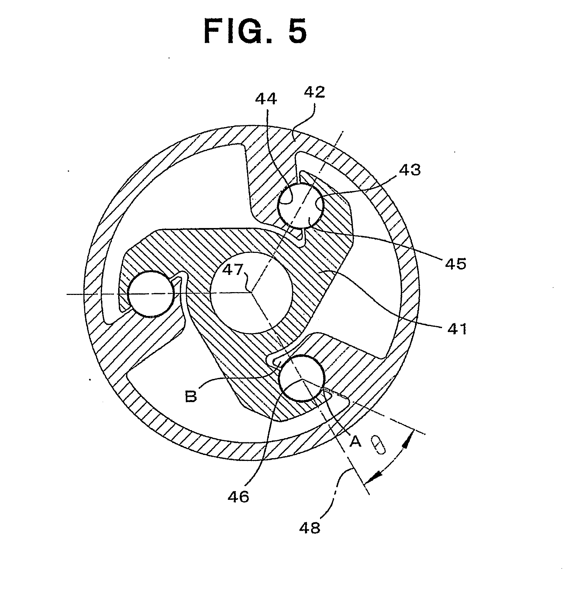

Accordingly, in the present invention, as shown in Fig. 5, guide grooves 43, 44 formed in inner ring 41 and outer ring 42 so as to face one another are formed in such a manner that, with respect to the shape in a cross section including a virtual line 48 that links a center 46 of ball 45 held between both guide grooves 43, 44 and a common center of rotation 47 of the inner ring 41 and the outer ring 42, one shoulder part (A) of one guide groove 43 is wrapped around relatively to the outer circumference of ball 45 so as to exceed the virtual line 48, and a shoulder part (B) of the other guide groove 44 which is positioned on the opposite side to the shoulder part (A) of the one guide groove 43 via the ball 45 interposed is wrapped around relatively to the outer circumference of the ball 45 so as to exceed the virtual line 48, respectively, and an amount of wraparound exceeding the virtual line 48 of both shoulder parts (A) and (B) (in the figure, indicated by an angle $\theta$) is set at an amount determined such that even if the inner ring 41 and the outer ring 42 are rotated relative to one another in a direction moving away from one another, the ball 45 will not drop from between both guide grooves 43, 44. Namely, so to speak, the structure is formed so that the shoulder parts (A) and (B) overhang relatively to the outer circumference of ball 45 by a predetermined amount on the basis of virtual line 48. By such a structure, while a predetermined power transmission function is ensured when inner ring 41 and outer ring 42 loaded with a torque are rotated relatively to one another in a direction moving close to one another, when inner ring 41 and outer ring 42 are rotated relatively to one another in a direction moving away from one another, both shoulder parts (A) and (B) come into contact with ball 45 so as to nip the ball 45, and therefore, the ball 45 itself is prevented from dropping from between both guide grooves 43, 44. As a result, a desired linking between inner ring 41 and outer ring 42 may be always kept. Further, in this improved structure, because the number of sets of combination of guide grooves 43, 44 and balls 45 is reduced down to half, the number of places to be precisely processed is also reduced down to half, the cost for processing these structural parts is reduced, and a cost reduction as a whole can be achieved. Furthermore, by reduction of necessary structural portions, lightening in weight also becomes possible.

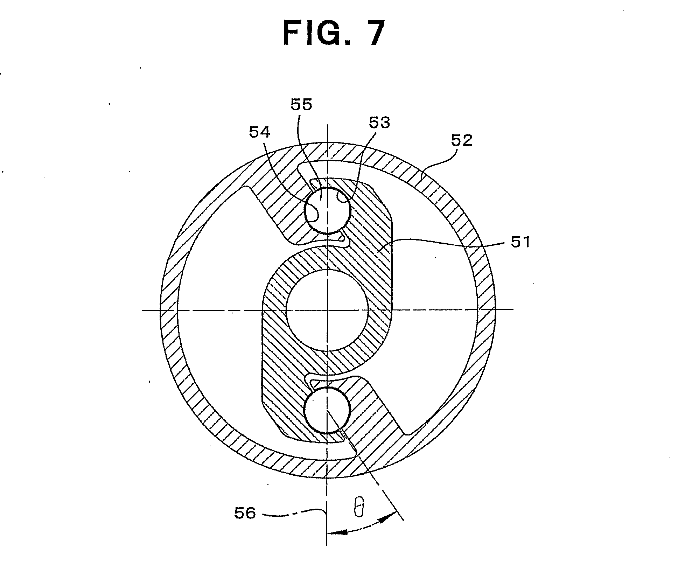

In such a compressor according to the present invention, it is preferred that the guide grooves formed in the inner ring and the outer ring so as to face one another and the ball held between both guide grooves are disposed at a plurality of sets in a circumferential direction from balance of a transmitted torque at the time of power transmission, etc., although a structure of one set is possible theoretically. In the structure shown in Fig. 5, three sets are disposed in the circumferential direction, and in the structure shown in Fig. 7 described later, two sets are disposed in the circumferential direction. With respect to the disposition form in the circumferential direction, disposition at same intervals (at same pitches) is preferable from the viewpoint of balance of transmitted torque, etc.

Further, in the present invention, in order to more securely achieve the structure such that the ball will not drop from between both guide grooves even if the inner ring and the outer ring are rotated relative to one another in a direction moving away from one another, as described later, it is preferred that radii from the above-described common center of rotation of both shoulder parts (A) and (B) corresponding to the above-described amount of wraparound and a diameter of the ball are set at a condition being related to one another. In this case, a clearance between the ball and each guide groove can also be considered.

Effect according to the Invention

Thus, in the compressor according to the present invention, while the merits due to the previously proposed structure described in Patent document 1, namely, the merits of making the compressor small-sized, improvement of durability and silent performance, improvement of processing performance, reduction of cost, etc. can be ensured, by improvement due to the present invention, because the number of balls and the number of guide grooves can be reduced, the cost of parts can be reduced. Further, because the number of sets of ball/guide groove can be reduced, the number of processes for assembly and the cost therefor can be reduced, and further, lightening in weight may be performed.

Brief explanation of the drawings

[Fig. 1] Fig. 1 is a vertical sectional view of a compressor showing an example of a structure previously proposed by the applicant of the present invention which becomes a basic structure for improvement by the present invention.
[Fig. 2] Fig. 2 is a vertical sectional view of the compressor depicted in Fig. 1, showing an operational condition different from that depicted in Fig. 1.
[Fig. 3] Fig. 3 is an exploded perspective view of a portion including a wobble plate rotation preventing mechanism (a constant velocity joint mechanism) of the compressor depicted in Fig. 1.
[Fig. 4] Fig. 4 shows a schematic diagram of the constant velocity joint mechanism of the compressor depicted in Fig. 1 (Fig. 4 (A)) and a schematic diagram showing an example in case where a part of guide groove processing portions is simply abolished from the constant velocity joint mechanism (Fig. 4 (B)).
[Fig. 5] Fig. 5 is a schematic diagram of a constant velocity joint mechanism of a compressor according to an embodiment of the present invention.
[Fig. 6] Fig. 6 is an explanation diagram showing a principle of the present invention in the constant velocity joint mechanism depicted in Fig. 5.
[Fig. 7] Fig. 7 is a schematic diagram of a constant velocity joint mechanism of a compressor according to another embodiment of the present invention.

Embodiments for carrying out the Invention

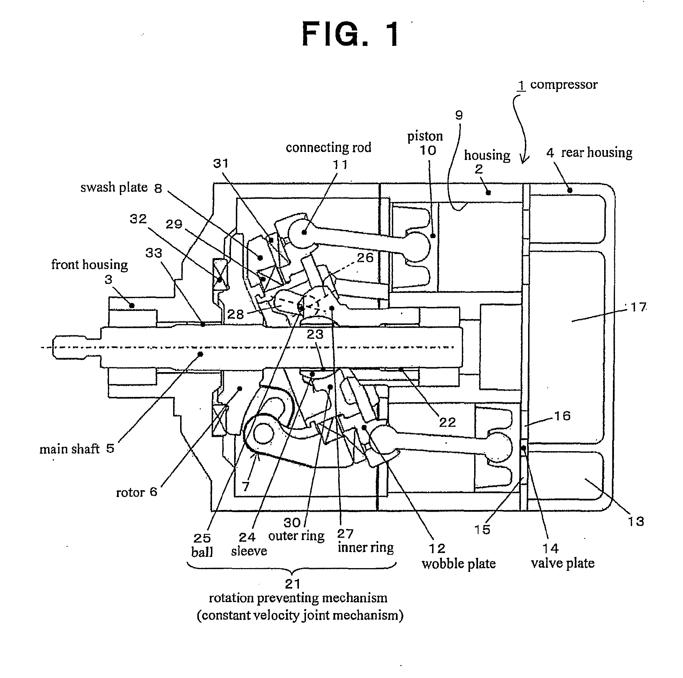

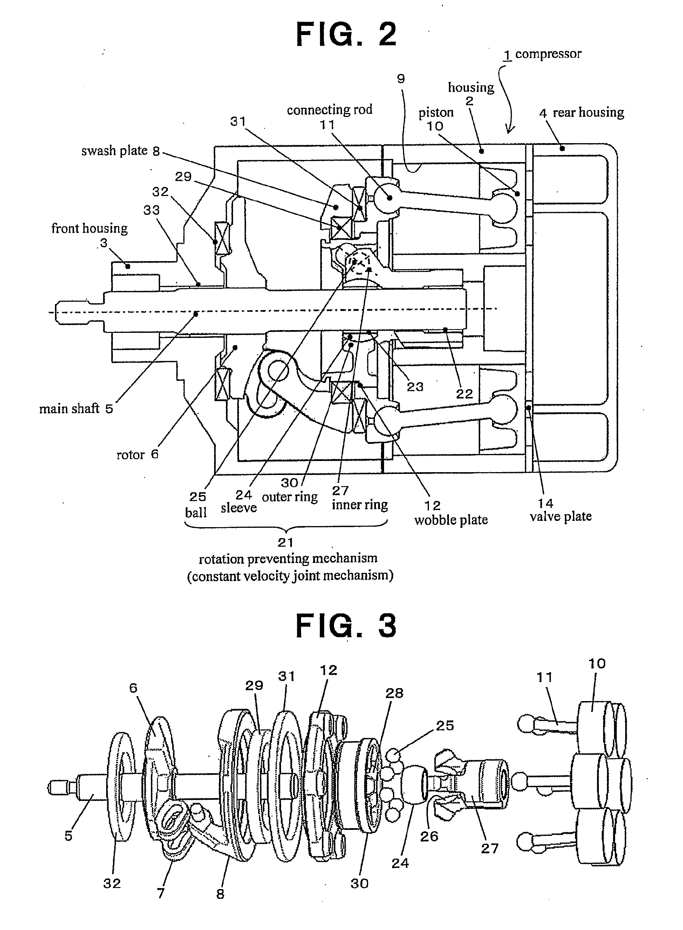

Hereinafter, the present invention will be explained more concretely, together with desirable embodiments. First, an example of a structure previously proposed by the applicant of the present invention, which becomes a basic structure for improvement by the present invention, will be explained referring to Figs. 1-3. Fig. 1 shows an example of a basic structure of a wobble plate type variable displacement compressor having a wobble plate rotation preventing mechanism, and shows its entire structure in the operation state at the condition of the displacement achieving its maximum discharge. Fig. 2 shows the operation state of the compressor depicted in Fig. 1 at the condition of the displacement achieving its minimum discharge, and Fig. 3 shows a portion including the wobble plate rotation preventing mechanism (constant velocity joint mechanism) in the compressor according to the embodiment of the basic structure depicted in Fig. 1, as an exploded perspective view.

In Figs. 1 and 2, a compressor 1 has a housing 2 disposed at the central portion, a front housing 3 and a rear housing 4 disposed on both sides of the housing 2 as its housings, and a main shaft 5 inputted with a rotational drive power from outside is provided over the range from the portion of housing 2 up to the position extending through front housing 3. A rotor 6 is fixed to main shaft 5 so as to be rotated integrally with main shaft 5, and a swash plate 8 is connected to rotor 6 via a hinge mechanism 7, changeably in angle and rotatably together with main shaft 5. Piston 10 is reciprocally inserted into each cylinder bore 9, and piston 10 is connected to wobble plate 12 via connecting rod 11. The rotational movement of swash plate 8 is converted into the wobble movement of wobble plate 12, the wobble movement is transmitted to piston 10 via connecting rod 11, and piston 10 is reciprocated. Fluid to be compressed (for example, refrigerant) is sucked from suction chamber 13 formed in rear housing 4 into cylinder bore 9 through suction hole 15 formed on valve plate 14 (a suction valve is omitted in the figure) accompanying with the reciprocating movement of piston 10, and after the sucked fluid is compressed, the compressed fluid is discharged into discharge chamber 17 through discharge hole 16 (a discharge valve is omitted in the figure), and therefrom, sent to an external circuit.

It is necessary that the above-described wobble plate 12 performs a wobble movement at a condition where its rotation is prevented. Hereinafter, the remaining portions of compressor 1 will be explained mainly with respect to the rotation preventing mechanism of the wobble plate 12, which comprises a constant velocity joint mechanism, in reference to Figs. 1 to 3.

A constant velocity joint mechanism 21 is provided as a rotation preventing mechanism of wobble plate 12 and a power transmission mechanism to wobble plate 12, and in the above-described embodiment, this rotation preventing mechanism (constant velocity joint mechanism) 21 is formed from a mechanism comprising (a) an inner ring 27 provided in housing 2 movably in the axial direction although its rotation is prevented, supporting main shaft 5 via a bearing 22 (radial bearing) at its inner diameter portion to rotate relatively and to move relatively in the axial direction and having a plurality of guide grooves 26 for guiding a plurality of balls 25 provided for power transmission, (b) a sleeve 24 functioning as a wobble central member of the wobble movement of wobble plate 12, provided on main shaft 5 to rotate relatively thereto and to move in the axial direction and engaged with inner ring 27 movably in the axial direction together with inner ring 27, (c) an outer ring 30 having a plurality of guide grooves 28 for guiding balls 25 at positions opposing respective guide grooves 26 of inner ring 27, supported on sleeve 24 wabblingly, connected with wobble plate 12 fixedly on its outer circumference and supporting swash plate 8 rotatably via a bearing 29 (radial bearing), and (d) a plurality of balls 25 held by guide grooves 26, 28 formed in inner ring 27 and outer ring 30 at a condition of opposing each other and performing power transmission by being compressed between both guide grooves 26, 28. Thrust bearings 31, 32 are interposed between wobble plate 12 and swash plate 8 and between rotor 6 and front housing 3, respectively. Further, although inner ring 27 is supported in housing 9 movably in the axial direction, its rotation is prevented. As means for preventing the rotation, a general rotation regulating means such as a key or a spline may be used (not depicted). Furthermore, although the rear end of main shaft 5 is supported by bearing 22 provided on the inner diameter portion of inner ring 27, because main shaft 5 is supported also at the side of front housing 3 through the compression main mechanism portion rotatably via bearing 33 (radial bearing), it is radially supported on both sides (inboard supporting).

In rotation preventing mechanism 21 of wobble plate 12 constructed as described above, outer ring 30 is wabblingly supported by sleeve 24 through the spherical surface contact, and sleeve 24 is supported by rotational main shaft 5 rotatably and movably in the axial direction, and by this structure, it is possible to make play in the radial direction between rotational main shaft 5 and the whole of the wobble mechanism portion small, thereby improving the reliability and reducing vibration and noise. Further, in the above-described embodiment, since main shaft 5 is supported in the condition of inboard supporting on both sides of the compression main mechanism portion by bearing 22 provided in the inner diameter portion of inner ring 27 and bearing 33 provided on front housing 3 side, a sufficiently high rigidity can be ensured even if the diameter of main shaft 5 is relatively small, the whirling of main shaft 5 can also be suppressed small, making small-sized can be easily achieved, and improvement of reliability and reduction of vibration and noise may be possible. Further, as the result of suppressing the whirling of rotational main shaft 5 small, the whirling of the whole of the rotational portion rotated together with main shaft 5 can also be suppressed to be small, and therefore, the rotational balance of the whole of the rotated portion becomes remarkably good. Where, in the above-described structure, it is possible to extend main shaft 5 rearward and to replace it for a structure being supported directly by housing 2 via a bearing. Furthermore, in the above-described embodiment, by the engagement of the spherical surface (concave spherical surface) formed in the inner diameter side of inner ring 27 with the spherical surface (convex spherical surface) formed in the outer diameter side of sleeve 24, a mutual supporting between both members is performed. By adjusting a clearance in this supporting portion, it is possible to absorb a relative whirling of the inner and outer rings caused by the dispersion of the positions of the guide grooves for a plurality of balls 25 operating for power transmission, whereby the uniform and continuous contact of balls 25 is further improved, and it is more advantageous with respect to reliability, vibration and noise. Where, although in the above-described embodiment outer ring 30 and wobble plate 12 are formed as members separated from each other and they are fixed to each other, these members may be formed integrally. By this integration, the number of parts may be further reduced and the assembly may be further facilitated.

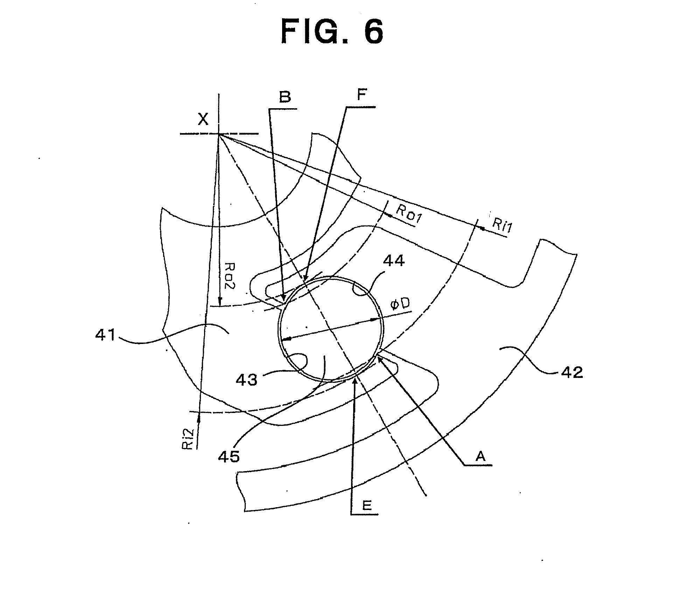

On the premise of such a structure, the present invention has added a further improvement for the portion of the constant velocity joint mechanism. Although the principle of the present invention has been already described using Fig. 5, referring to Fig. 6, more desirable structure and more desirable setting conditions (in particular, a setting condition where ball 45 will not drop in any case) will be explained in more detail.

Fig. 6 shows an enlargement diagram of a portion of a single ball 45 and a pair of guide grooves 43, 44 of inner ring 41 and outer ring 42 nipping the ball. The radii of the loci formed in case where the respective points of inner ring 41 and outer ring 42 are rotated around the common center of rotation X are represented as follows, and the diameter of ball 45 is represented as D.

Ri1: radius up to shoulder part A point of guide groove 43 of inner ring 41
Ri2: radius up to maximum distance point E of guide groove 43 of inner ring 41 with which ball 45 can comes into contact
Ro1: radius up to shoulder part B point of guide groove 44 of outer ring 42
Ro2: radius up to minimum distance point F of guide groove 44 of outer ring 42 with which ball 45 can comes into contact

In order to achieve a condition where ball 45 will not drop even if inner ring 41 and outer ring 42 are rotated relative to one another in a direction moving away from one another, first, a distance between radii of shoulder part A and shoulder part B [Ri1 - Ro1] must be smaller than diameter of ball D. Therefore, the following equation must be satisfied.

$$D > Ri1 - Ro1 \qquad (1)$$

Further, even if the above-described equation (1) is satisfied, depending upon a clearance between ball 45 and each guide groove 43, 44, there may be a case where point A only, or point B only, does not come into contact with ball 45 (therefore, ball 45 will drop). Therefore, it is necessary to satisfy the following equation as a restriction when ball 45 is in a condition coming into contact with point E.

$$D > (Ri1 - Ro1) + (Ri2 - Ri1) = Ri2 - Ro1 \qquad (2)$$

Similarly, it is necessary to satisfy the following equation as a restriction when ball 45 is in a condition coming into contact with point F.

$$D > (Ri1 - Ro1) + (Ro1 - Ro2) = Ri1 - Ro2 \qquad (3)$$

Therefore, in order to achieve a condition where ball 45 will not drop even if inner ring 41 and outer ring 42 are rotated relative to one another in a direction moving away from one another, the shapes of respective guide grooves 43, 44 and the diameter D of ball 45 may be set so as to satisfy the above-described equations (1), (2) and (3). By employing such setting conditions, the dropping of ball 45 can be surely prevented in consideration of conditions up to the clearances between ball 45 and the respective guide grooves 43, 44.

Consequently, at a state preventing the dropping of ball 45 and always keeping the combination between the ball and guide grooves 43, 44, the number of sets of ball 45/guide grooves 43, 44 can be reduced half from six sets down to three sets. Therefore, while a predetermined power transmission function required to the constant velocity joint mechanism is completely maintained as it is, the number of places to be processed for guide grooves 43, 44 particularly required with precise processing can be greatly reduced (down to half), the cost for processing for structural parts is reduced, and the cost for the constant velocity joint mechanism, ultimately, for the whole of the compressor, can be achieved. Further, by reduction of the number of sets of ball 45/guide grooves 43, 44, reduction of processes for assembly, and cost reduction accompanying therewith, can also be achieved. Furthermore, by reduction of the number of necessary structural portions in the constant velocity joint mechanism, lightening in weight of the constant velocity joint mechanism, ultimately, lightening in weight of the whole of the compressor, also becomes possible.

Although three sets of ball 45/guide grooves 43, 44 are disposed in the embodiment depicted in Fig. 5, disposition of more than three sets is possible, and further, as shown in Fig. 7, disposition of two sets of ball/guide grooves is also possible. In case of two sets, as shown in Fig. 7, it is preferred that the sets of respective guide grooves 53, 54 of inner ring 51 and outer ring 52 and balls 55 provided between both guide grooves 53, 54 are at positions opposed to each other by 180 degrees in angle from the viewpoint of balance of transmitted torque. Also in this embodiment, the concept with respect to the amount wraparound relative to virtual line 56 of the shoulder parts of guide grooves 53, 54 is similar to that in the aforementioned embodiment.

Industrial Applications of the Invention

The structure of the compressor according to the present invention can be applied to a wobble plate type variable displacement compressor used in any field, and especially, it is suitable for use in the field for vehicles highly requiring making small-sized, increase of reliability, improvement of durability and silent performance, and cost down, in particular, for use in an air conditioning system for vehicles.

Explanation of symbols

1: compressor
2: housing
3: front housing
4: rear housing
5: main shaft
5a: center axis
6: rotor
7: hinge mechanism
8: swash plate
9: cylinder bore
10: piston
11: connecting rod
12: wobble plate
13: suction chamber
14: valve plate
15: suction hole
16: discharge hole
17: discharge chamber
21: rotation preventing mechanism of wobble plate (constant velocity joint mechanism)
22, 23, 29, 33: bearing (radial bearing)
24: sleeve
25: ball
26: guide groove of inner ring
27: inner ring
27a: inner ring in case where a part of processing for guide grooves is simply abolished
28: guide groove of outer ring
30: outer ring
30a: outer ring in case where a part of processing for guide grooves is simply abolished
31, 32: thrust bearing
41, 51: inner ring
42, 52: outer ring
43, 53: guidegroove formed on inner ring
44, 54: guide groove formed on outer ring
45, 55: ball
46: center of ball
47: common center of rotation of inner ring and outer ring
48, 56: virtual line
A, B: shoulder part
X: common center of rotation

**Claims**

1. A compressor formed as a wobble plate type variable displacement compressor having a wobble plate which is connected to pistons inserted reciprocally into cylinder bores, in which a rotational movement of a swash plate, rotated together with a main shaft and supported changeably in angle relative to said main shaft, is converted into a wobble movement of said wobble plate, and which transmits said wobble movement to said pistons to reciprocate said pistons, and having a constant velocity joint mechanism as a rotation preventing mechanism of said wobble plate and a power transmission mechanism to said wobble plate, said constant velocity joint mechanism comprising (a) an inner ring provided movably in an axial direction while being prevented with rotation, supporting said main shaft at a radially inner portion rotatably mutually and movably mutually in an axial direction, and having guide grooves for guiding balls provided for power transmission, (b) an outer ring having guide grooves for guiding said balls at positions facing said guide grooves of said inner ring, supporting said wobble plate on an outer circumference of said outer ring and supporting said swash plate rotatably via a bearing, and (c) balls held by said guide grooves formed in said inner ring and said outer ring so as to face one another and performing power transmission by being compressed between said guide grooves, **characterized in that**:

   said guide grooves formed in said inner ring and said outer ring so as to face one another are formed in such a manner that, with respect to a shape in a cross section including a virtual line that links a center of said ball held between said both guide grooves and a common center of rotation of said inner ring and said outer ring, one shoulder part (A) of one of said guide grooves is wrapped around relatively to an outer circumference of said ball so as to exceed said virtual line, and a shoulder part (B) of the other guide groove which is positioned on the opposite side to said shoulder part (A) of said one guide groove via said ball interposed is wrapped around relatively to said outer circumference of said ball so as to exceed said virtual line, respectively, and an amount of wraparound exceeding said virtual line of both shoulder parts (A) and (B) is set at an amount determined such that even if said inner ring and said outer ring are rotated relative to one another in a direction moving away from one another, said ball will not drop from between said both guide grooves.

2. The compressor according to claim 1, wherein said guide grooves formed in said inner ring and said outer ring so as to face one another and said ball held between both guide grooves are disposed at a plurality of sets in a circumferential direction.

3. The compressor according to claim 1 or 2, wherein, in order to form so that said ball will not drop from between said both guide grooves even if said inner ring and said outer ring are rotated relative to one another in a direction moving away from one another, radii from said common center of rotation of said both shoulder parts (A) and (B) corresponding to said amount of wraparound and a diameter of said ball are set at a condition being related to one another.

# FIG. 1

# FIG. 2

1 compressor

housing
2

piston
10

4 rear housing

9

connecting rod
11

31

swash plate 8

29

32

33

front housing
3

main shaft 5

rotor 6

23

22

25 ball

24 sleeve

30 outer ring

27 inner ring

12 wobble plate

14 valve plate

21
rotation preventing mechanism
(constant velocity joint mechanism)

# FIG. 3

6

29  31  12  28

25

11  10

5

32  7  8

30

24

26

27

# FIG. 4

(A)

(B)

EP 2 525 096 A1

# FIG. 5

# FIG. 6

# FIG. 7

## INTERNATIONAL SEARCH REPORT

| International application No. |
| --- |
| PCT/JP2011/000457 |

**A. CLASSIFICATION OF SUBJECT MATTER**
*F04B27/08*(2006.01)i, *F16D3/22*(2006.01)i

According to International Patent Classification (IPC) or to both national classification and IPC

**B. FIELDS SEARCHED**

Minimum documentation searched (classification system followed by classification symbols)
F04B27/08, F16D3/22, F16D3/221, F16D3/227, F16D3/24

Documentation searched other than minimum documentation to the extent that such documents are included in the fields searched
Jitsuyo Shinan Koho          1922-1996    Jitsuyo Shinan Toroku Koho    1996-2011
Kokai Jitsuyo Shinan Koho    1971-2011    Toroku Jitsuyo Shinan Koho    1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2008-138637 A (Sanden Corp.), 19 June 2008 (19.06.2008), paragraphs [0020] to [0025]; fig. 1 to 3 & US 2010/0092312 A1    & EP 2119911 A1 & WO 2008/069001 A1 | 1-3 |
| Y | JP 57-73225 A (Gaston Devos), 07 May 1982 (07.05.1982), page 3, upper right column, line 3 to page 4, upper left column, line 17; fig. 1 to 6 & US 4473360 A              & GB 2086008 A & DE 3110738 A1             & FR 2492484 A1 & ES 500901 A1              & BR 8103209 A & CA 1152763 A1             & IT 1142363 B | 1-3 |

☐  Further documents are listed in the continuation of Box C.          ☐  See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 12 May, 2011 (12.05.11) | Date of mailing of the international search report 24 May, 2011 (24.05.11) |
| --- | --- |
| Name and mailing address of the ISA/ Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008138637 A